# EUROPEAN PATENT SPECIFICATION

(11) **EP 2 955 305 B1**
(45) Date of publication and mention of the grant of the patent: **03.05.2017**
(21) Application number: 15159112.0
(22) Date of filing: 13.03.2015
(51) Int. Cl.: E05C 19/14

(54) **Toggle link latch**
Gelenkstangenverriegelung
Verrou à bascule

(30) Priority: 13.03.2014 US 201461952521 P
(43) Date of publication of application: 16.12.2015
(73) Proprietor: QRP, Inc., Leland, NC 28451 (US)
(72) Inventor: HERNANDEZ, Andres, Yorba Linda, CA California 92887 (US)
(74) Representative: Dunleavy, Kevin James

(56) References cited:
- EP-A2- 0 206 648
- WO-A1-2009/009732
- US-A- 5 620 212
- US-A- 5 984 382
- US-B1- 6 325 428

## Description

### Cross-Reference to Related Application

The present application is a non-provisional patent application of provisional application no. 61/952,521, filed on March 13, 2014 entitled "Toggle Link Latch" priority from which is hereby claimed.

### Field of the Invention

The present invention relates to a cinch latch, which connects a first structural element to a keeper on a second structural element. More specifically, the invention relates to aircraft panel latches having a hook at one end and an over-center locking linkage at the other.

### Background of the Invention

A wide variety of latching mechanisms for use in aircraft exist in the prior art because aircraft have many components, such as fuselage panels including cowlings and the like, which must be opened and closed very securely. For example, tension latches mounted on one panel cinch to a keeper on a second panel to hold one of the movable panels closed. Other latches include sliding toggle linkages to minimize the kinematic envelope of the latch. These linkages rotate around a mounting pin to produce the latch reach. The complexity of quality aircraft latches makes them relatively large and heavy. Since every component of an aircraft should be as light as possible, it would be desirable to provide a quality latch having a reduced size and weight compared to the prior art.

To reduce weight, aircraft panels are relatively thin, which translates to an associated reduction in sturdiness. As a result, the aircraft panels and other structures to which the above-described latches are attached are delicate and can be easily damaged. For example, with some prior art latches, the free end of an open latch may obstruct the opening defined by the movable panel. Therefore, when closing the movable panel, it can strike the latch and be damaged if the latch is not properly retracted. This problem is often encountered with open overhead panels where gravity biases the latch assembly in the closed direction, thereby orienting the hook in an extended position pointing upwardly. This configuration occurs if the center of gravity of the latch is "behind" (in the direction away from the hook) the pivot point of the panel mounting pin. If this occurs, the hook end of the latch could be jammed against the edge of the mating substructure if the latch isn't first pulled away before attempting to close the panel. This weight distribution problem is often solved by adding unnecessary or "dead" weight to the hook end of the latch so that it hangs downward and away from the load plane. However, this solution contradicts a salient aircraft design consideration of weight reduction. Therefore, it would be desirable to provide a quality latch that reduces the risk of accidental damage to the surrounding aircraft structures to which it is attached.

### Summary of the Invention

The invention comprises a latch mechanism with an arrangement of components that places the center of gravity of the mechanism in front of the mounting pin. Therefore, in applications where the latch swings in the vertical plane, the hook will necessarily hang downward away from the keeper when the latch is opened without the need for adding dead weight. This functionality has been achieved in part by locating the mounting pin slot at the very end of the latch arm and arranging the toggle linkage so that the linkage-to-hook pivot joint is on the body of the latch arm in front of the mounting pin.

The latch includes a unique nesting toggle linkage that minimizes overall latch volume. Each link of the linkage has a U-shaped lateral cross section with a central channel that receives the other link when the latch is closed. Furthermore, the links fold toward each other instead of away from each other while closing, which reduces the latch's overall length when fully closed. The latch may include a keeper detector, which prevents the actuation handle from closing if the keeper is not captured by the hook. The keeper detector helps prevent unsuccessful latching and provides a visual indication when a panel is closed but the keeper is not engaged.

Before explaining at least one embodiment of the invention in detail, it is to be understood that the invention is not limited in its application or to the details of construction in the following description or illustrated in the drawings. The invention encompasses numerous other embodiments and can be carried out in various ways.

### Brief Description of the Drawings

Fig. 1 is a top right front perspective view of one embodiment of the invention;
Fig. 2 is a cross-sectional view of the embodiment shown in Fig. 1;
Fig. 3 is a bottom plan view of the embodiment shown in Fig. 1;
Fig. 4 is an exploded assembly view of the embodiment show in Fig. 1; and,
Figs. 5a through 5e depict a series of paired corresponding perspective and elevational views of another embodiment of the invention in various operational configurations.

### Description of the Preferred Embodiment(s)

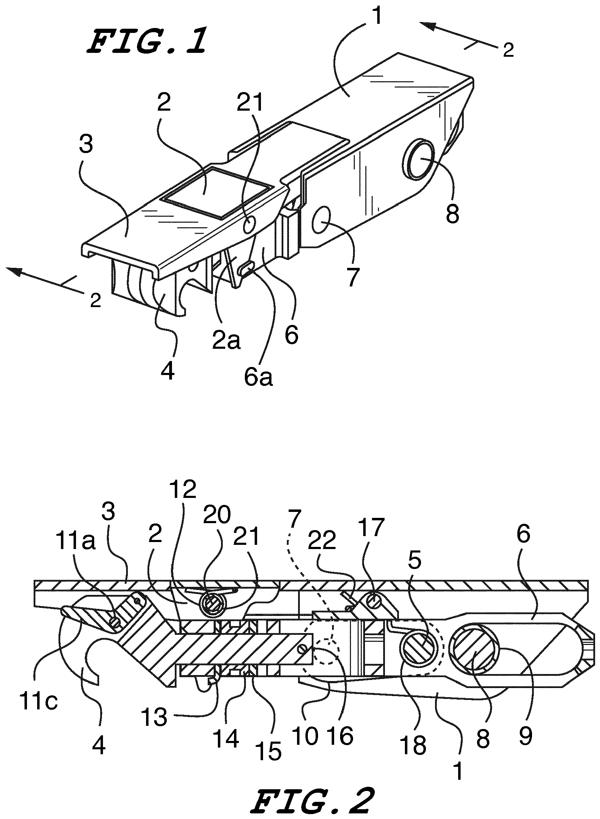

A latch in accordance with one preferred embodiment of the invention is illustrated and described with respect to Figs. 1-4. Referring first to Figs. 1 and 2, the latch has a substantially-symmetrical construction about a longitudinal axis so features shown on one side apply equally to the opposite side. The latch generally includes an upper link 1, lower link 10, a handle 3, a hook 4, and additional linkage components that operably connect the handle 3 to the hook 4. As described in greater detail below, movement of the handle 3 extends and retracts the hook 4 between open and closed positions.

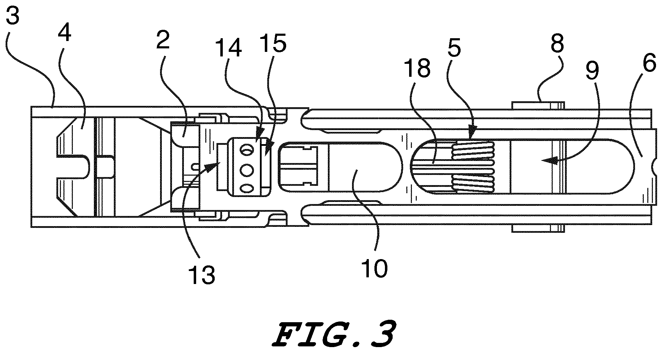

The upper link 1 is constructed of thin sheet metal and has side walls that surround other internal components of the latch to minimize the latch's overall volume and weight. The upper link 1 operably pivots about a mounting pin 8 that connects the latch to an associated fixed structure such as a portion of an aircraft (not shown). Rivets 7 straddle the front walls of the upper link and hingedly connects it to the front of a lower link 10, which nests inside a central channel of the upper link 1. The lower link 10 is also pivotally connected to an elongate latch arm 6 by a pin 5. The rear walls of the latch arm 6 include a pair of slots 6b in which the mounting pin 8 can translate. Each link includes a center channel between opposing thin sidewalls forming a U-shaped lateral cross section. When assembled, the body of the latch arm 6 nests within the lower link 10, which in turn nests within the upper link 1. This nested configuration provides a very compact device as better appreciated when viewing Fig. 3. This combination of elements forms the latch toggle linkage.

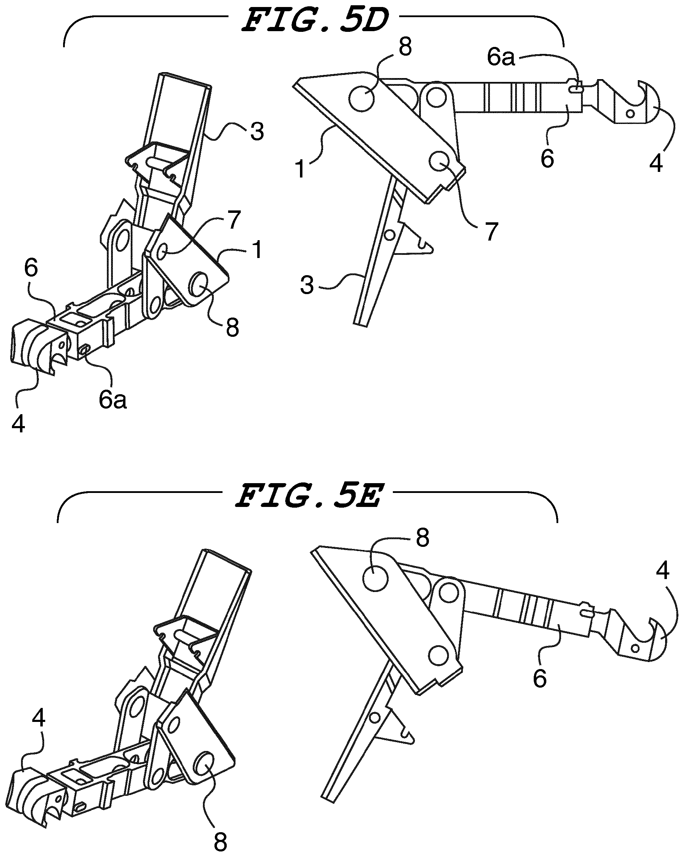

A handle 3 is rotatably connected to the lower link 10 and the upper link 1 by a pin 17, which carries a spring 22 that biases the handle upward away from the lower link 10 toward the open position of the latch. The location of the pin 17 permits a small amount of free travel of the handle. Likewise, another spring 18 biases the lower link upward away from the latch arm 6 to hold the latch open. The handle 3 actuates the latch between open and closed positions. After a limited amount of free movement restricted by the back end of the handle abutting the lower link 10, continued lifting of the handle 3 will lift the lower link upward, extending the hook and releasing the latch as best seen in Figs. 5d and 5e.

As described above, the handle extends and retracts a latch arm 6 having hook 4 at the front end. The hook 4 engages and grabs a keeper (not shown) in the closed position and applies a tensile clinch load between the keeper and the latch mounting pin 8.

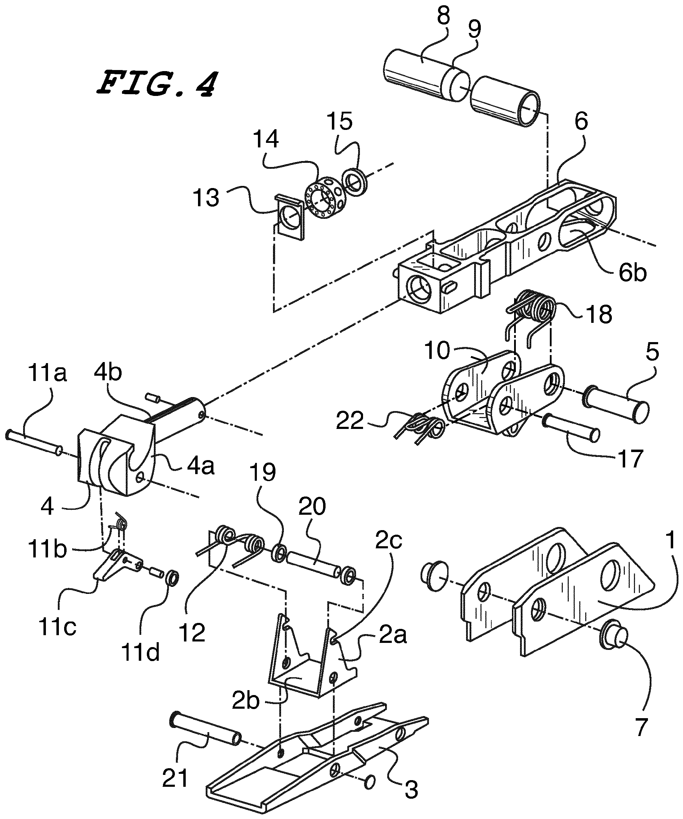

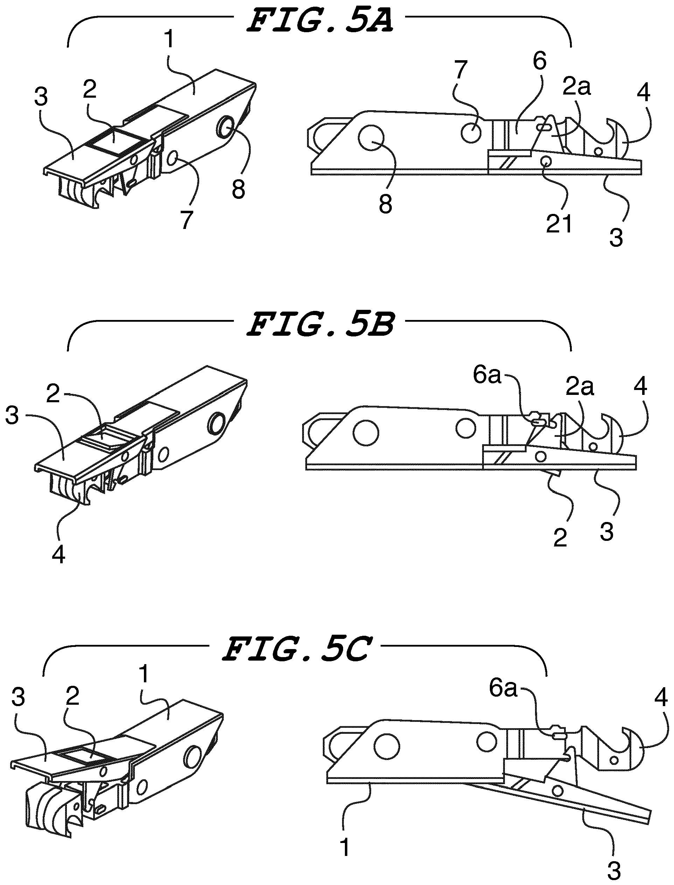

The handle 3 includes a trigger 2 that releasably locks the handle 3 in a closed position. The trigger 2 is pivotally attached to the handle 3 by a pin 20, which includes a concentric sleeve 21 about which the handle can pivot to a limited extent. The trigger 2 releasably holds the handle 3 down in the configuration shown in Figs. 1 and 5a when the latch is locked. As best seen in Fig. 4, the trigger 2 has a generally-planar base 2b and two side arms 2a fixed at their proximal ends to and extending transversely from opposed sides of the base 2b. The distal end of each arm 2a includes a transverse slot 2c, which creases a barbed end. The slots 2c are shaped and located to engage a catch 6a on opposed sides of the latch arm 6. In this embodiment, the catches 6a comprise a small protuberance that extends from the side walls of the latch arm 6. The trigger 2 is spring loaded and the side arms 2a include barbed ends, which bear against the catches 6a as the handle 3 is closed. This action ensures that the slots 2c capture the catches 6a to provide a self-actuating effect when the handle 3 is pushed fully closed.

An exploded view of the latch arm 6, and the other latch components, is shown in Fig. 4 from a bottom perspective. The latch arm 6 is arranged in fixed connection to a hook 4 at the front end and in translating connection to the mounting pin at the rear end. The mounting pin 8 is surrounded by a bushing 9 received through a pair of longitudinally-extending slots 6b in the side walls of the latch arm 6. The hook assembly 4 consists of hook-shaped head 4a and a cylindrical mount 4b, which is constructed to cooperatively engage and connect to a yoke in the front of the latch arm 6. A nut 14, nut plate 13, spring 15 and stop pin 16 connect the hook 4 to the yoke.

The trigger 2 is connected to the handle 3 by a pin 20. Another spring 12 biases the trigger 2 upwardly so that its top surface is flush with the top of the handle 3 when the latch is closed and locked as shown in Fig. 1. Each side arm 2a of the trigger 2 has a slot which engages the locking catch 6a protruding from the sides of the latch arm 6 as seen in Figure 1 and as described above.

The various components discussed above are shown assembled and in the locked position viewed from the side and the top in Fig. 2. In a preferred embodiment, the hook 4 includes means for detecting whether or not the hook is engaged with the keeper. In one embodiment, the detecting means 11 is fixed to the head 4a as best seen in Fig. 4. The detecting means includes a sensor lever 11c having one arm that is biased downward into the mouth of the hook 4. When the keeper (not shown) properly occupies the hook 4, a first lever arm is pushed upwardly against the bias of a spring 11b into the position shown in this Fig. 2. Otherwise, when the mouth of the hook 4 is unoccupied, the first lever arm will point downwardly and a second lever arm will then point upwardly and make contact with the handle 3 to stop the handle 3 from fully closing. Thus, the detecting means prevents the latch 3 from closing if the hook is not properly engaged with the keeper.

The compact design of the latch is best illustrated in Fig. 3. The major components, including the upper link 1, the lower link 10, the latch arm 6, and the handle 3 all nest with one another more or less when the latch is closed. As shown in Fig. 4, the upper link 1 has U-shaped central channel with sidewalls that surrounds the lower link 10 and part of the handle 3. The lower link 10 likewise has a channel that surrounds a portion of the latch arm 6. In addition, the upper link 1 surrounds a portion of the handle 3. As depicted in Fig. 3, the relatively thin sidewalls of the links provide a minimal lateral dimension of the latch. The length of the latch is also minimized by the toggle linkage because the toggle links fold together rather than spread apart as leverage is applied to the hook when it is being closed. This feature is illustrated in reverse order in the opening sequence of Figs. 5a through 5e. The construction of the toggle linkage provides an over-center alignment of the link joints so that a portion of the applied load is transmitted through the linkage to forcibly hold the latch in a stable closed condition.

Figs. 5a through 5e depict a sequence of configurations of the latch as it transitions from fully closed to fully open. A top perspective view of the latch is shown on the left of each Figure. On the right of each Figure, the latch is shown in the same configuration as on the left but in an upside-down, side-elevational view, which is a typical in an aircraft application where the latch swings in the vertical plane. Operation of the keeper detecting means 11 is not shown since the associated mating keeper is not depicted here.

In Fig. 5a, the latch is shown properly closed and secured. A portion of the load applied between the hook and the mounting pin 8 holds the latch closed by virtue of an over-center alignment of the linkage joints. In Fig. 5b, the latch is shown immediately after the trigger 2 has been depressed to release the handle from the locked position. Initial depression of the trigger rotates the side arms 2a out of engagement with the catches 6a on latch arm 6.

In Fig. 5c, the latch is shown after gravity and the spring has urged the handle 3 outward to the extent of its free travel on the lower link. At this location, a back end of the handle contacts the top of the lower link. In this configuration with the handle popped outward, the handle can be easily grasped to open the latch.

In Fig. 5d, the latch is shown after the handle has been pulled open, which extends the hook to its maximum reach or take-up position. Fig. 5d illustrates the nesting of the links 1 and 10 together with the handle 3 as well as disengagement of the side arm 2a from the catches 6a.

Fig. 5e depicts the maximum reach position of the hook 4, which corresponds to a release position of the hook 4 from a keeper. A spring biases the lower link away from the hook 4 to hold the latch fully opened. With the keeper released, the latch arm rotates about the mounting pin 8, which allows the hook 4 to hang down away from the keeper (to the extent allowed by surrounding structures) because the center of gravity of the latch is in front of the mounting pin 8.

With the operational explanation of Figs. 5a through 5e taken together with the explanation of Figs. 1 through 4, a full understanding of the invention will have been appreciated by one of skill in the mechanical arts. It will be readily apparent that the objects of the invention have been achieved by providing a light-weight latch with an extremely small kinematic envelope while allowing adequate reach and closing leverage. Furthermore, the objective of providing a lever latch which is protective of surrounding structures has also been achieved.

The foregoing description is considered as illustrative only of the principles of the invention. Further, since numerous modifications and changes will readily occur to those skilled in the art, it is not desired to limit the invention to the exact construction and operation shown and described, and accordingly all suitable modifications and equivalents should be considered encompassed within the scope of the invention as described in the appended claims.

## Claims

1. A latch for applying a clinch load between a mounting pin (8) and a keeper, comprising:
an elongate latch arm (6) having a body portion slideably affixed to an upper toggle link (1) by a transverse mounting pin (8) received through a longitudinally extending slot (6b) in the latch arm (6) at a first end thereof, and having a hook (4) at a second end thereof opposite the first end for engaging the keeper; and
a lower link (10) hingedly connected to the latch arm (6) at one end and hingedly connected to the upper link (1) at an opposite end thereof, said upper and lower links (1, 10) providing a toggle linkage for extending and retracting the latch arm (6) between an open and a closed position; and
wherein the toggle linkage and latch arm (6) are nested when the latch is in the closed position, said lower link (10) being nested in a first channel in the upper link (1) and a portion of said latch arm (6) being nested within a second channel in the lower link (10).

2. The latch of claim 1 further including a handle (3) affixed to the lower link (10) for actuating the latch between the open and closed positions, wherein the handle (3) is moveable between locked and unlocked positions within a limited range of rotational motion with respect to the lower link (10).

3. The latch of claim 2 wherein a portion of the handle (3) is nested within said first channel of the upper link (1).

4. The latch of any one of claims 2-3 further including a lock assembly including a trigger (2) pivotably connected to the handle (3) which releasably holds the handle (3) in the locked position.

5. The latch of claim 4 wherein said trigger (2) comprises a base (2b) and a pair of side arms (2a) fixed to and extending from opposed sides of said base (2b), and said lock assembly includes a pair of catches (6a) extending from the latch arm (6) that releasably engage said side arms to hold the handle (3) in the locked position, wherein the base (2b) of said trigger (2) lies substantially flush with the handle (3) when the handle (3) is held in the locked position.

6. The latch of claim 5 wherein said side arms (2a) of said trigger (2) have barbed ends that bear against said catches (6a) as the handle (3) is moved to the locked position.

7. The latch of any one of claims 2-6 wherein the handle (3) includes bias means that urges the handle (3) toward the unlocked position.

8. The latch of any one of claims 6-7 wherein said handle (3) is substantially flush with the upper link (1) when the handle (3) is in the locked position.

9. The latch of any one of claims 1-8 wherein the joints of the links form an over-center position of the toggle linkage when the latch is closed whereby a portion of the load applied between the mounting pin (8) and the latch arm (6) forces the linkage toward the closed position.

10. The latch of claim 9 and at least 4 wherein the trigger (2) includes bias means that resiliently urge the trigger (2) toward the locked position.

11. The latch of any one of claims 1-10 wherein the upper and lower links (1, 10) each have a U-shaped lateral cross section and the lower link (10) includes bias means that urges the lower link (10) in a direction away from said hook (4).

12. The latch of any one of claims 1-11 wherein the latch arm (6) includes a keeper detector mechanism (11) which prevents the handle (3) from closing if the mouth of the hook (4) is not occupied by the keeper.

13. The latch of claim 12 wherein the keeper detector mechanism (11) includes a rotatable lever (11c) having two arms, a first arm that contacts the handle (3) and prevents it from closing when a second arm of the rotatable lever (11c) occupies the mouth of the hook (4) indicating the absence of the keeper and the keeper mechanism includes bias means that urges the second lever arm toward the mouth of the hook (4).

14. The latch of any one of claims 1-13 wherein the toggle linkage is a toggle linkage in which the toggle links fold together as the handle (3) moves toward the locked position and wherein the mounting pin (8) is configured and positioned to connect the latch to a supporting structure.

15. A supporting structure or aircraft comprising latch of any one of claims 1-14.

## Patentansprüche

1. Eine Verriegelung zum Anlegen einer Klinkenlast zwischen einem Befestigungszapfen (8) und einer Sperrklinke, umfassend:
einen länglichen Verriegelungsarm (6) mit einem Körperabschnitt, der verschiebbar an einem oberen Gelenkglied durch einen querverlaufenden Befestigungszapfen (8) befestigt ist, welcher durch einen sich in Längsrichtung erstreckenden Schlitz (6b) in dem Verriegelungsarm (6) an einem ersten Ende desselben aufgenommen ist und an seinem zweiten Ende einen Haken (4) aufweist, der für das Eingreifen in die Sperrklinke dem ersten Ende gegenüberliegt, und
ein unteres Gelenk (10), das gelenkig mit dem Verriegelungsarm (6) an einem Ende verbunden ist und gelenkig mit dem oberen Gelenk (1) an einem gegenüberliegenden Ende davon verbunden ist, wobei das obere und das untere Gestänge (1, 10) eine Kniehebelverbindung für das Verlängern und Zurückziehen des Verriegelungsarms (6) zwischen einer entriegelten und einer verriegelten Stellung bilden, und
wobei die Kniehebelverbindung und der Verriegelungsarm (6) verschachtelt sind, wenn sich die Verriegelung in verriegelter Stellung befindet, wobei das untere Gestänge in einem ersten Kanal in dem oberen Gestänge (1) verschachtelt ist und ein Abschnitt des Verriegelungsarms (6) in einem zweiten Kanal in dem unteren Gestänge (10) verschachtelt ist.

2. Verriegelung von Anspruch 1, ferner umfassend einen am unteren Gestänge (10) befestigten Handgriff (3) für das Betätigen der Verriegelung zwischen der entriegelten und der verriegelten Stellung, wobei der Handgriff (3) zwischen der verriegelten Stellung und der entriegelten Stellung in einem begrenzten Drehbewegungsbereich in Bezug auf das untere Gestänge (10) bewegbar ist.

3. Verriegelung von Anspruch 2, wobei ein Abschnitt des Handgriffs (3) in dem ersten Kanal des oberen Gestänges (1) verschachtelt ist.

4. Verriegelung eines beliebigen der Ansprüche 2 bis 3, ferner umfassend eine Verschlussbaugruppe einschließlich eines Auslösers (2), der mit dem Handgriff (3) schwenkbar verbunden ist, welcher den Handgriff (3) lösbar in der verriegelten Stellung hält.

5. Verriegelung von Anspruch 4, wobei der Auslöser (2) ein Unterteil (2b) und ein Paar von Seitenarmen (2a) aufweist, die an gegenüberliegenden Seiten des Unterteils (2b) befestigt sind und sich von diesen erstrecken, und wobei die Verschlussbaugruppe ein Paar von Sperrklinken (6a) umfasst, die sich von dem Verriegelungsarm (6) erstrecken und in die Seitenarme eingreifen, um den Handgriff (3) in der verriegelten Stellung zu halten, wobei das Unterteil (2b) des Auslösers (2) im Wesentlichen bündig mit dem Handgriff (3) liegt, wenn der Handgriff (3) in der verriegelten Stellung gehalten wird.

6. Verriegelung von Anspruch 5, wobei die Seitenarme (2a) des Auslösers (2) Widerhakenenden aufweisen, die gegen die Sperrklinken (6a) anliegen, wenn der Handgriff (3) in die verriegelte Stellung bewegt wird.

7. Verriegelung nach einem der Ansprüche 2 bis 6, wobei der Handgriff (3) Vorspannmittel aufweist, die den Handgriff (3) in Richtung der entriegelten Stellung drücken.

8. Verriegelung nach einem der Ansprüche 6 bis 7, wobei der Handgriff (3) mit dem oberen Gestänge (1) im Wesentlichen bündig ist, wenn sich der Handgriff (3) in der verriegelten Stellung befindet.

9. Verriegelung nach einem der Ansprüche 1 bis 8, wobei die Gelenke der Gestänge eine mittige Stellung über der Kniehebelverbindung einnehmen, wenn die Verriegelung verriegelt ist, wobei ein Teil der zwischen dem Befestigungszapfen (8) und dem Verriegelungsarm (6) angewendeten Last die Kniehebelverbindung in Richtung der verriegelten Stellung zwingt.

10. Verriegelung von Anspruch 9 und mindestens 4,
wobei der Auslöser (2) Vorspannmittel umfasst, die den Auslöser (2) federnd in Richtung der verriegelten Stellung drücken.

11. Verriegelung nach einem der Ansprüche 1 bis 10, wobei das obere und das untere Gestänge (1, 10) jedes für sich einen U-förmigen seitlichen Querschnitt aufweisen und das untere Gestänge (10) Vorspannmittel umfasst, die das untere Gestänge in eine dem Haken (4) abgewandte Richtung zwingen.

12. Verriegelung nach einem der Ansprüche 1 bis 11, wobei der Verriegelungsarm (6) einen Sperrklinken-Erkennungsmechanismus (11) umfasst, der verhindert, dass sich der Handgriff (3) schließt, wenn die Öffnung des Hakens (4) nicht von der Sperrklinke belegt ist.

13. Verriegelung von Anspruch 12, wobei der Sperrklinken-Erkennungsmechanismus (11) einen drehbaren Hebel (11c) mit zwei Armen umfasst, einen ersten Arm (3), der den Handgriff berührt und verhindert, dass er schließt, wenn ein zweiter Arm des drehbaren Hebels (11c) die Öffnung des Hakens (4) belegt, die das Fehlen der Sperrklinke anzeigt, und der Sperrklinkenmechanismus Vorspannmittel umfasst, die den zweiten Hebelarm in Richtung der Öffnung des Hakens (4) drücken.

14. Verriegelung nach einem der Ansprüche 1 bis 13, wobei die Kniehebelverbindung eine Kniehebelverbindung ist, bei der sich die Kniehebel zusammenfalten, wenn sich der Handgriff (3) in Richtung der verriegelten Stellung bewegt, und wobei der Befestigungszapfen so aufgebaut und angeordnet ist, dass er die Verriegelung mit einer Tragkonstruktion verbindet.

15. Eine Tragkonstruktion oder ein Luftfahrzeug, umfassend eine Verriegelung nach einem der Ansprüche 1 bis 14.

## Revendications

1. Un verrou permettant d'appliquer une charge d'assemblage entre une tige de fixation (8) et une tige de retenue, comprenant :
un bras de verrou allongé (6) comprenant un corps relié de manière coulissante à un élément de liaison articulée supérieur (1) au moyen d'une tige de fixation transversale (8) insérée dans une fente longitudinale (6b) du bras de verrou (6) en une première extrémité de celui-ci, et comprenant un crochet (4) en une seconde extrémité située à l'opposé de la première de façon à entrer en prise avec la tige de retenue ; et
un élément de liaison inférieur (10) relié de manière articulée au bras de verrou (6) en une extrémité et relié de manière articulée à l'élément de liaison supérieur (1) en une seconde extrémité située à l'opposé de la première, lesdits éléments de liaison articulée supérieur et inférieur (1, 10) constituant un mécanisme articulé permettant de déployer et de replier le bras de verrou (6) entre une position ouverte et une fermée ; et
**caractérisé en ce que** le mécanisme articulé et le bras de verrouillage (6) sont emboîtés l'un dans l'autre lorsque le bras est en position fermée, ledit élément de liaison inférieur (10) étant emboîté dans une première gorge située dans l'élément de liaison supérieur (1) et une partie dudit bras de verrou (6) étant emboîtée dans une seconde gorge située dans l'élément de liaison inférieur (10).

2. Le verrou selon la revendication 1, comprenant de plus une manette (3) fixée sur l'élément de liaison inférieur (10) permettant de faire passer le verrou entre la position ouverte et la position fermée, **caractérisé en ce que** la manette (3) peut effectuer un mouvement de rotation limité entre la position de blocage et la position de libération par rapport à l'élément de liaison inférieur (10).

3. Le verrou selon la revendication 2, **caractérisé en ce qu'**une partie de la manette (3) est emboîtée dans la première gorge située dans l'élément de liaison supérieur (1).

4. Le verrou selon l'une quelconque des revendications 2 à 3, comprenant de plus un système de verrouillage comportant une gâchette (2) raccordée à la manette (3) de manière à pouvoir pivoter, et qui permet de maintenir de façon libérable la manette (3) en position de blocage.

5. Le verrou selon la revendication 4, **caractérisé en ce que** ladite gâchette (2) comprend une base (2b) et une paire de bras latéraux (2a) fixés sur et s'étendant entre les côtés opposés de ladite base (2b), et ledit système de verrouillage incluant une paire d'éléments d'arrêt s'étendant à partir du bras de verrou (6) venant en prise de façon libérable avec lesdits bras pour maintenir la manette (3) en position de blocage, **caractérisé en ce que** la base (2b) de ladite gâchette (2) est sensiblement de niveau avec la manette (3) lorsque la manette (3) est maintenue en position de blocage.

6. Le verrou selon la revendication 5, **caractérisé en ce que** les bras latéraux (2a) de ladite gâchette (2) présentent des extrémités rainurées s'appuyant sur lesdits éléments d'arrêt (6a) lorsque la manette (3) se déplace vers la position de blocage.

7. Le verrou selon l'une quelconque des revendications 2 à 6, **caractérisé en ce que** la manette (3) comprend un moyen qui contraint la manette (3) vers la position de libération.

8. Le verrou selon l'une quelconque des revendications 6 à 7, **caractérisé en ce que** ladite manette (3) est sensiblement de niveau avec l'élément de liaison supérieur (1) lorsque la manette (3) est en position de blocage.

9. Le verrou selon l'une quelconque des revendications 1 à 8, **caractérisé en ce que** les articulations des éléments de liaison définissent une position décentrée du mécanisme articulé lorsque le verrou est fermé, de telle manière qu'une partie de la charge appliquée entre la tige de fixation (8) et le bras de verrou (6) contraint le mécanisme vers la position fermée.

10. Le verrou selon la revendication 9 et au moins la revendication 4, **caractérisé en ce que** la gâchette (2) comprend un moyen qui contraint de manière élastique la gâchette (2) vers la position de blocage.

11. Le verrou selon l'une quelconque des revendications 1 à 10, **caractérisé en ce que** les éléments de liaison articulée supérieur et inférieur (1, 10) présentent chacun une section transversale en forme de U et que l'élément de liaison inférieur (10) comprend un moyen qui contraint l'élément de liaison inférieur (10) dans la direction opposée à celle du crochet (4).

12. Le verrou selon l'une quelconque des revendications 1 à 11, **caractérisé en ce que** le bras de verrou (6) comprend un mécanisme de détection de la tige de retenue (11) qui empêche la manette (3) de se fermer si la tige de retenue ne se trouve pas dans l'ouverture du crochet (4).

13. Le verrou selon la revendication 12, **caractérisé en ce que** le mécanisme de détection de la tige de retenue (11) comprend un levier pivotant (11c) comportant deux bras, un premier bras venant en contact avec la manette (3) et l'empêchant de se fermer quand le deuxième bras du levier pivotant (11c) se trouve dans l'ouverture du crochet (4) indiquant ainsi l'absence de la tige de retenue et le mécanisme de détection de la tige de retenue comprenant un moyen qui contraint le second bras du levier vers l'ouverture du crochet (4).

14. Le verrou selon l'une quelconque des revendications 1 à 13, **caractérisé en ce que** le mécanisme articulé est un mécanisme articulé dans lequel les éléments de liaison articulée se rabattent lorsque la manette (3) se déplace vers la position de blocage et **caractérisé en ce que** la tige de fixation (8) est configurée et positionnée de façon à fixer le verrou sur une structure support.

15. Une structure support ou un avion comprenant un verrou selon l'une quelconque des revendications 1 à 14.
